(19) Europäisches Patentamt / European Patent Office / Office européen des brevets

(11) **EP 4 726 596 A1**

(12) **EUROPEAN PATENT APPLICATION**
published in accordance with Art. 153(4) EPC

(43) Date of publication:
**15.04.2026 Bulletin 2026/16**

(21) Application number: **24844192.5**

(22) Date of filing: **02.02.2024**

(51) International Patent Classification (IPC):
*G06F 30/20* (2020.01)

(52) Cooperative Patent Classification (CPC):
**G06F 18/21; G06F 30/20;** G06F 2119/02

(86) International application number:
**PCT/CN2024/075459**

(87) International publication number:
**WO 2025/020493 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.07.2023 CN 202310932061**

(71) Applicant: **Shenzhen Yinwang Intelligent Technologies Co., Ltd.**
**Shenzhen, Guangdong 518110 (CN)**

(72) Inventor: **XU, Ke**
**Shenzhen, Guangdong 518129 (CN)**

(74) Representative: **Thun, Clemens**
**Mitscherlich PartmbB**
**Karlstraße 7**
**80333 München (DE)**

(54) **PARAMETER OPTIMIZATION METHOD AND APPARATUS, AND ELECTRONIC DEVICE**

(57) A parameter optimization method and apparatus, and an electronic device are provided. The method includes: obtaining a first group of values of a first performance indicator, where the first group of values of the first performance indicator is generated when a first service runs based on a first value of a to-be-adjusted parameter in a first time period, the first performance indicator is associated with performance of the first service, and the first service runs on a first device; determining, based on the first group of values of the first performance indicator and a second group of values of the first performance indicator, that a value change of the first performance indicator is caused by a change of the to-be-adjusted parameter from a second value to the first value, where the second group of values of the first performance indicator is generated when the first service runs based on the second value of the to-be-adjusted parameter in a second time period; and optimizing the to-be-adjusted parameter based on the first value. This solution may be applied to end-to-end performance optimization of an autonomous driving service of an intelligent vehicle, and helps improve parameter optimization efficiency.

<u>300</u>

S301: Obtain a first group of values of a first performance indicator, where the first group of values of the first performance indicator is generated when a first service runs based on a first value of a to-be-adjusted parameter in a first time period, and the first performance indicator is associated with performance of the first service

S302: Determine, based on the first group of values of the first performance indicator and a second group of values of the first performance indicator, that a change of the first performance indicator is caused by a change of the to-be-adjusted parameter from a second value to the first value, where the second group of values of the first performance indicator is generated when the first service runs based on the second value of the to-be-adjusted parameter in a second time period

S303: Optimize the to-be-adjusted parameter based on the first value

FIG. 3

**Description**

This application claims priority to Chinese Patent Application No. 202310932061.0, filed with the China National Intellectual Property Administration on July 26, 2023 and entitled "PARAMETER OPTIMIZATION METHOD AND APPARATUS, AND ELECTRONIC DEVICE", which is incorporated herein by reference in its entirety.

**TECHNICAL FIELD**

This application relates to the field of autonomous driving, and more specifically, to a parameter optimization method and apparatus, and an electronic device.

**BACKGROUND**

End-to-end performance of an autonomous driving service refers to whole-process network performance from a sensor sending collected data to a controller sending a control instruction.

Factors that affect the end-to-end performance of the autonomous driving service include hardware computing power, memory bandwidth, an operating system (operating system, OS) scheduling capability, and a service triggering mode. The memory bandwidth and the OS scheduling capability may be configured by adjusting parameters related to service performance, to optimize the end-to-end performance of the autonomous driving service. Because mutual impact between services in a system are complex, and adjustment effects of different parameters are coupled, adjusting related parameters based on a parameter optimization algorithm becomes a current mainstream parameter optimization solution.

When the parameter optimization algorithm is used to perform parameter optimization, a parameter is usually selected as a reference for optimization (the parameter is referred to as an indicator in the following), and whether to continue to adjust a to-be-adjusted parameter based on a current value of the to-be-adjusted parameter is determined based on the indicator. Because there are many factors that affect the end-to-end performance of the autonomous driving service, the indicator is unstable, and jitter is large. Therefore, an indicator optimization effect obtained by adjusting the to-be-adjusted parameter may be submerged in noise, and even an optimization direction may be deviated. Consequently, performance of the parameter optimization algorithm is degraded to an effect close to a random search, and an optimization function of the parameter optimization algorithm cannot be implemented.

In view of this, an efficient and reliable parameter optimization solution is to be developed as soon as possible.

**SUMMARY**

This application provides a parameter optimization method and apparatus, and an electronic device, so that a value of a to-be-adjusted parameter corresponding to an indicator change caused by non-indicator jitter can be selected as an input of a next iteration of a parameter optimization algorithm, to help improve convergence of the parameter optimization algorithm, and improve efficiency of parameter optimization and reliability of an optimization result.

According to a first aspect, a parameter optimization method is provided. The method includes: obtaining a first group of values of a first performance indicator, where the first group of values of the first performance indicator is generated when a first service runs based on a first value of a to-be-adjusted parameter in a first time period, the first performance indicator is associated with performance of the first service, and the first service runs on a first device; determining, based on the first group of values of the first performance indicator and a second group of values of the first performance indicator, that a value change of the first performance indicator is caused by a change of the to-be-adjusted parameter from a second value to the first value, where the second group of values of the first performance indicator is generated when the first service runs based on the second value of the to-be-adjusted parameter in a second time period; and optimizing the to-be-adjusted parameter based on the first value.

It should be noted that optimizing the to-be-adjusted parameter may be understood as: determining a value or a value range of the to-be-adjusted parameter, to achieve an objective of optimizing the first performance indicator.

For example, the first group of values and the second group of values of the first performance indicator may respectively include a plurality of pieces of data, and a quantity of pieces of data of the first group of values of the first performance indicator may be the same as or different from a quantity of pieces of data of the second group of values of the first performance indicator.

For example, the first time period and the second time period may be set by a user, or may be set by a system by default. The first time period and the second time period may have same lengths, or the first time period and the second time period may have different lengths. For example, the first time period may be 3 seconds, 5 seconds, or another value, and the second time period may be 3 seconds, 5 seconds, or another value.

For example, the second value of the to-be-adjusted parameter may be a value when parameter adjustment is not performed, and the first value of the to-be-adjusted parameter may be a value of the to-be-adjusted parameter after adjustment; or the second value of the to-be-adjusted parameter may be a valid value output in a previous iteration of the parameter optimization algorithm, and the first value of the to-be-adjusted parameter may be a value output in a current iteration of the parameter optimization algorithm. It may be understood that the valid value but not indicator jitter causes the change of the first performance indicator.

For example, the value change of the first performance indicator may include: a change of an average value of the first performance indicator before and after the value of the to-be-adjusted parameter is adjusted.

For example, the first device may be an intelligent driving device like a vehicle, or the first device may be a computer loaded with a virtual autonomous driving system or an autonomous driving system simulator.

In the foregoing technical solution, two groups of values of corresponding first performance indicators before and after the to-be-adjusted parameter is adjusted are compared, to determine whether the value change of the first performance indicator after the to-be-adjusted parameter is adjusted is caused by the indicator jitter. When the value change of the first performance indicator is not caused by the indicator jitter but a result of adjusting the to-be-adjusted parameter, the to-be-adjusted parameter is continuously optimized based on the value of the adjusted to-be-adjusted parameter, to help improve a convergence capability (or a convergence speed) of the parameter optimization algorithm, and improve parameter optimization efficiency and reliability of an optimization result.

With reference to the first aspect, in some implementations of the first aspect, the method further includes: obtaining a first group of values of a second performance indicator in the first time period, where the second performance indicator is associated with performance of a second service, and the second service runs on the first device; and determining, based on a second group of values of the second performance indicator and the first group of values of the second performance indicator, a value change of the second performance indicator when the to-be-adjusted parameter changes from the second value to the first value, where the second group of values of the second performance indicator is generated when the second service runs based on the second value of the to-be-adjusted parameter in the second time period; and optimizing the to-be-adjusted parameter based on the first value includes: optimizing the to-be-adjusted parameter based on the first value when the value change of the second performance indicator does not exceed a deterioration limit threshold.

For example, the second service and the first service may be a same service, or may be different services. When the second service and the first service are different services, both the second service and the first service run on the first device, and share resources of the first device, for example, resources such as memory bandwidth or an OS scheduling capability.

For example, the first performance indicator is central processing unit (central processing unit, CPU) usage associated with the first service, and the second performance indicator is CPU usage associated with the second service; or the first performance indicator is CPU usage associated with the first service, and the second performance indicator is a graphics processing unit (graphics processing unit, GPU) frame rate associated with the first service.

For example, the value change of the second performance indicator may include: a change of an average value of the second performance indicator before and after the value of the to-be-adjusted parameter is adjusted. Specifically, the value change of the second performance indicator may be a difference between an average value of the first group of values of the second performance indicator and an average value of the second group of values of the second performance indicator.

For example, the deterioration limit threshold may be determined based on the average value of the second group of values of the second performance indicator, or the deterioration limit threshold may be another value.

In an example, a larger value of the second performance indicator indicates poorer performance of the second service, and the deterioration limit threshold may be 10% or 5% of the average value of the second group of values of the second performance indicator. Further, that the value change of the second performance indicator does not exceed the deterioration limit threshold may include: The difference between the average value of the first group of values of the second performance indicator and the average value of the second group of values of the second performance indicator is less than or equal to the deterioration limit threshold. For example, if the second performance indicator is CPU usage, and the average value of the second group of values of the second performance indicator is 50%, the deterioration limit threshold may be 5%. If the average value of the first group of values of the second performance indicator is 55%, the value change of the second performance indicator does not exceed the deterioration limit threshold; or if the average value of the first group of values of the second performance indicator is 56%, the value change of the second performance indicator exceeds the deterioration limit threshold.

In still another example, a smaller value of the second performance indicator indicates poorer performance of the second service, and the deterioration limit threshold may be -10% or - 5% of the average value of the second group of values of the second performance indicator. Further, that the value change of the second performance indicator does not exceed the deterioration limit threshold may include: The difference between the average value of the first group of values of the second performance indicator and the average value of the second group of values of the second performance indicator is greater than or equal to the deterioration limit threshold. For example, if the second performance indicator is a GPU frame rate, and the average value of the second group of values of the second performance indicator is 50 frames per second (frame per second, fps), the deterioration limit threshold may be -5 fps. If the average value of the first group of values of the second performance indicator is 46 fps, the value change of the second performance indicator does not exceed the deterioration limit threshold; or if the average value of the first group of values of the second performance indicator is 44 fps, the value change of the second performance indicator does not exceed the deterioration limit threshold.

In a specific implementation process, after the value of the to-be-adjusted parameter changes, the second performance indicator may be optimized or deteriorated. For example, when the performance indicator is CPU usage, if a value change of the to-be-adjusted parameter causes an increase in the value of the performance indicator, that is, the CPU usage increases, it is considered that the performance indicator is deteriorated; or if a value change of the to-be-adjusted parameter causes a decrease in the value of the performance indicator, that is, the CPU usage decreases, it is considered that the performance indicator is optimized. For another example, when the performance indicator is a GPU frame rate, if a value change of the to-be-adjusted parameter causes an increase in the value of the performance indicator, that is, the GPU frame rate increases, it is considered that the performance indicator is optimized; or if a value change of the to-be-adjusted parameter causes a decrease in the value of the performance indicator, that is, the GPU frame rate decreases, it is considered that the performance indicator is deteriorated. In this application, optimization or deterioration of a performance indicator may indicate that performance of a service associated with the performance indicator is optimized or deteriorated.

In other words, the value change of the second performance indicator may evaluate an optimization degree or a deterioration degree of the second performance indicator, that is, evaluate an optimization degree or a deterioration degree of the second performance indicator based on a value change amplitude of the second performance indicator. Similarly, the value change of the first performance indicator may evaluate an optimization degree or a deterioration degree of the first performance indicator.

In the foregoing technical solution, when the value change of the first performance indicator is caused by the change of the value of the to-be-adjusted parameter from the second value to the first value, and the value change of the second performance indicator does not exceed the deterioration limit threshold, the to-be-adjusted parameter is optimized based on the first value. When the to-be-adjusted parameter affects a plurality of performance indicators, it is helpful to ensure that a deterioration degree of another performance indicator is small when one performance indicator is optimized, and even the plurality of performance indicators are optimized simultaneously.

With reference to the first aspect, in some implementations of the first aspect, determining that the value change of the first performance indicator is caused by the change of the to-be-adjusted parameter from the second value to the first value includes: performing a hypothesis test on an average value of the first group of values of the first performance indicator and an average value of the second group of values of the first performance indicator according to a first hypothesis; and when the hypothesis test succeeds, determining that the value change of the first performance indicator is caused by the change of the to-be-adjusted parameter from the second value to the first value.

For example, a T test or a Z test may be used to perform a hypothesis test on the average value of the first group of values of the first performance indicator and the average value of the second group of values of the first performance indicator. The first hypothesis may be an original hypothesis in the T test or the Z test. When the original hypothesis is true, it is determined that the hypothesis test succeeds.

Generally, the indicator jitter conforms to normal distribution. In the foregoing technical solution, whether the value change of the first performance indicator is caused by the indicator jitter may be determined in a hypothesis test manner. The solution is simple and easy to deploy.

With reference to the first aspect, in some implementations of the first aspect, the method further includes: determining, based on the first group of values of the first performance indicator and the second group of values of the first performance indicator, whether a variance change of the first performance indicator is within a preset range; and optimizing the to-be-adjusted parameter based on the first value includes: when the variance change of the first performance indicator is within the preset range, optimizing the to-be-adjusted parameter based on the first value.

For example, the jitter of the first performance indicator may increase due to the value change of the to-be-adjusted parameter. In this case, the variance change of the first performance indicator is limited to the preset range, and this helps reduce the jitter of the first performance indicator.

In some possible implementations, when the variance change of the first performance indicator is within the preset range, and the value change of the second performance indicator does not exceed the deterioration limit threshold, the to-be-adjusted parameter is optimized based on the first value.

In the foregoing technical solution, optimization of the first performance indicator may be implemented by reducing the jitter of the first performance indicator. In addition, based on a preset condition, when the jitter of the first performance indicator is reduced, it can be further ensured that the deterioration degree of the second performance indicator is not excessively large, and even the second performance indicator can be optimized.

With reference to the first aspect, in some implementations of the first aspect, the method further includes: performing a hypothesis test on a variance of the first group of values of the first performance indicator and a variance of the second group of values of the first performance indicator according to a second hypothesis; and when the hypothesis test succeeds, determining that the variance change of the first performance indicator is within the preset range.

For example, a chi-square test or an F test may be used to perform a hypothesis test on the variance of the first group of values of the first performance indicator and the variance of the second group of values of the first performance indicator. For example, the second hypothesis may be an original hypothesis of the chi-square test or the F test. When the original hypothesis is true, it is determined that the hypothesis test succeeds.

In the foregoing technical solution, the jitter of the first performance indicator can be reduced in a hypothesis test manner, and the solution is simple and easy to deploy.

With reference to the first aspect, in some implementations of the first aspect, the method further includes: when the value change of the first performance indicator is not caused by the change of the to-be-adjusted parameter from the second value to the first value, re-obtaining a value of the to-be-adjusted parameter.

In the foregoing technical solution, when the value change of the first performance indicator is not caused by the change of the to-be-adjusted parameter from the second value to the first value, it indicates that the value change of the first performance indicator may be caused by noise like indicator jitter. If the to-be-adjusted parameter is continuously optimized based on the first value, the parameter optimization algorithm may not converge, and parameter optimization efficiency is affected. Therefore, when the value change of the first performance indicator is not caused by the change of the to-be-adjusted parameter from the second value to the first value, the value of the to-be-adjusted parameter is re-obtained, which helps improve parameter optimization efficiency.

With reference to the first aspect, in some implementations of the first aspect, optimizing the to-be-adjusted parameter based on the first value includes: adjusting the first value to a third value of the to-be-adjusted parameter, to enable a running result of the first device to meet a specified condition.

For example, the running result of the first device includes a running result of the first service and/or a running result of the second service.

For example, that the running result of the first device meets the specified condition may include that the value of the first performance indicator reaches a set range, or may include that the value of the second performance indicator is within a set range, or may include that the jitter of the first performance indicator is within a set range.

For example, when the to-be-adjusted parameter is a third value, the parameter optimization algorithm converges.

With reference to the first aspect, in some implementations of the first aspect, the method further includes: recording an optimization log when the to-be-adjusted parameter is optimized based on the first value, where the optimization log includes at least one of the following: a reason why the first value of the to-be-adjusted parameter is modified, a value that is determined for the to-be-adjusted parameter and that exceeds a set range, a value of the to-be-adjusted parameter when the hypothesis test on the first performance indicator fails, and a value of the to-be-adjusted parameter when the hypothesis test on the first performance indicator succeeds but the hypothesis test on the second performance indicator fails.

For example, the reason why the first value of the to-be-adjusted parameter is modified may include: The first performance parameter corresponding to the first value does not reach the specified range or the first value does not enable the parameter optimization algorithm to converge; when the to-be-adjusted parameter changes to the first value, the change of the first performance indicator is caused by the jitter; when the to-be-adjusted parameter changes to the first value, the jitter of the first performance indicator exceeds the preset range; and when the to-be-adjusted parameter changes to the first value, the value change of the second performance indicator exceeds the deterioration limit threshold.

For example, that the hypothesis test on the first performance indicator fails may include: When the to-be-adjusted parameter changes to the first value, the change of the first performance indicator is caused by the indicator jitter; or when the first performance indicator needs to be optimized, the deterioration degree of the first performance indicator is high; or the jitter of the first performance indicator exceeds the set range.

For example, that the hypothesis test on the first performance indicator succeeds but the hypothesis test on the second performance indicator fails may include: The value change of the second performance indicator exceeds the deterioration limit threshold.

In the foregoing technical solution, in a parameter optimization process, a value of an abnormal to-be-adjusted parameter and/or a cause of an exception are recorded. This helps improve a problem locating capability in the parameter optimization process, help determine a cause of a parameter optimization failure, modify a related configuration of the parameter optimization algorithm, improve parameter optimization efficiency.

For example, the first service and/or the second service are/is related to autonomous driving.

According to a second aspect, a parameter optimization apparatus is provided, where the apparatus includes a first obtaining unit and a processing unit. The first obtaining unit is configured to obtain a first group of values of a first performance indicator, where the first group of values of the first performance indicator is generated when a first service runs based on a first value of a to-be-adjusted parameter in a first time period, the first performance indicator is associated with performance of the first service, and the first service runs on a first device. The processing unit is configured to: determine, based on the first group of values of the first performance indicator and a second group of values of the first performance indicator, that a value change of the first performance indicator is caused by a change of the to-be-adjusted parameter from a second value to the first value, where the second group of values of the first performance indicator is generated when the first service runs based on the second value of the to-be-adjusted parameter in a second time period; and optimize the to-be-adjusted parameter based on the first value.

With reference to the second aspect, in some implementations of the second aspect, the first obtaining unit is further configured to obtain a first group of values of a second performance indicator in the first time period, where the second performance indicator is associated with performance of a second service, the second service runs on the first device. The processing unit is further configured to: determine, based on a second group of values of the second performance indicator and the first group of values of the second performance indicator, a value change of the second performance indicator when the to-be-adjusted parameter changes from the second value to the first value, where the second group of values of the second performance indicator is generated when the second service runs based on the second value of the to-be-adjusted parameter in the second time period; and optimize the to-be-adjusted parameter based on the first value when the value change of the second performance indicator does not exceed a deterioration limit threshold.

With reference to the second aspect, in some implementations of the second aspect, the processing unit is configured to: perform a hypothesis test on an average value of the first group of values of the first performance indicator and an average value of the second group of values of the first performance indicator according to a first hypothesis; and when the hypothesis test succeeds, determine that the value change of the first performance indicator is caused by the change of the to-be-adjusted parameter from the second value to the first value.

With reference to the second aspect, in some implementations of the second aspect, the processing unit is further configured to: determine, based on the first group of values of the first performance indicator and the second group of values of the first performance indicator, whether a variance change of the first performance indicator is within a preset range; and when the variance change of the first performance indicator is within the preset range, optimize the to-be-adjusted parameter based on the first value.

With reference to the second aspect, in some implementations of the second aspect, the processing unit is further configured to: perform a hypothesis test on a variance of the first group of values of the first performance indicator and a variance of the second group of values of the first performance indicator according to a second hypothesis; and when the hypothesis test succeeds, determine that the variance change of the first performance indicator is within the preset range.

With reference to the second aspect, in some implementations of the second aspect, the apparatus further includes a second obtaining unit, configured to: when the value change of the first performance indicator is not caused by the change of the to-be-adjusted parameter from the second value to the first value, re-obtain a value of the to-be-adjusted parameter.

With reference to the second aspect, in some implementations of the second aspect, the processing unit is configured to adjust the first value to a third value of the to-be-adjusted parameter, to enable a running result of the first device to meet a specified condition.

With reference to the second aspect, in some implementations of the second aspect, the apparatus further includes a recording unit, configured to record an optimization log when the to-be-adjusted parameter is optimized based on the first value, where the optimization log includes at least one of the following: a reason why the first value of the to-be-adjusted parameter is modified, a value that is determined for the to-be-adjusted parameter and that exceeds a set range, a value of the to-be-adjusted parameter when the hypothesis test on the first performance indicator fails, and a value of the to-be-adjusted parameter when the hypothesis test on the first performance indicator succeeds but the hypothesis test on the second performance indicator fails.

For example, the first service and/or the second service are/is related to autonomous driving.

According to a third aspect, a parameter optimization apparatus is provided. The apparatus includes: a memory, configured to store a computer program; and a processor, configured to execute the computer program stored in the memory, to enable the apparatus to perform the method according to any one of the possible implementations of the first aspect.

According to a fourth aspect, an electronic device is provided. The electronic device includes the apparatus according to any one of the possible implementations of the second aspect or the third aspect.

With reference to the fourth aspect, in some implementations of the fourth aspect, the electronic device is an intelligent driving device like a vehicle.

According to a fifth aspect, a computer program product is provided. The computer program product includes computer program code. When the computer program code is run on a computer, the computer is enabled to perform the method according to any one of the possible implementations of the first aspect.

It should be noted that all or some of computer program code may be stored in a first storage medium. The first storage medium may be encapsulated together with a processor, or may be encapsulated separately from a processor.

According to a sixth aspect, a computer-readable medium is provided. The computer-readable medium stores instructions. When the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

**BRIEF DESCRIPTION OF DRAWINGS**

FIG. 1 is a diagram of an autonomous driving system;
FIG. 2 is a diagram of a structure of a parameter optimization system according to an embodiment of this application;
FIG. 3 is a schematic flowchart of a parameter optimization method according to an embodiment of this application;
FIG. 4 is a block diagram of a parameter optimization apparatus according to an embodiment of this application; and
FIG. 5 is another block diagram of a parameter optimization apparatus according to an embodiment of this application.

**DESCRIPTION OF EMBODIMENTS**

To facilitate understanding of solutions in embodiments of this application, concepts in this application are described first.

1. An autonomous driving operating system (referred to as an autonomous driving system below) is, for example, an operating system based on a portable operating system interface (portable operating system interface, POSIX) standard, is an operating system applicable to high-performance computing and high-bandwidth communication that are required by autonomous driving, and provides functions such as environment sensing, sensor fusion, and route planning of a vehicle.

2. Autonomous driving service: In the autonomous driving system, the service is usually a set of processes and/or threads that are encapsulated by using communication middleware and that have a specific autonomous driving function. The communication middleware may be a robot operating system (robot operating system, ROS), an automotive open system architecture communication management (automotive open system architecture communication management, AUTOSAR CM) module, or the like. The autonomous driving function may include functions such as environment sensing, sensor fusion, and route planning of a vehicle.

3. A performance indicator (or referred to as an indicator) is a parameter used as a reference in a process of adjusting a parameter that affects performance of an automatic driving service.

4. Indicator jitter is an inherent instability of a performance indicator, affected due to hardware computing power, memory bandwidth, an OS scheduling capability, and a service triggering mode when parameters are not adjusted or optimized.

5. A hypothesis test is a statistical inference method used to determine whether a difference between samples or a difference between a sample and a whole is caused by sampling errors or material differences. The hypothesis test includes but is not limited to the following:

(1) A Z test, also referred to as U test, is a method used to test a difference between sample average values. The Z test uses a theory of standard normal distribution (or Z distribution) to infer a probability of difference occurrence and compare whether a difference between two average values is significant. When an overall standard deviation is known, the Z test is used to verify whether a sample average value is equal to an expected value.

(2) A T test uses a theory of t distribution to infer a probability of difference occurrence and compare whether a difference between two average values is significant. When an overall standard deviation is unknown, the T test is used to verify whether a sample average value is equal to an expected value.

It should be noted that two parameters $\mu$ (sample average value) and $\sigma$ (overall standard deviation) of normal distribution determine a position and a form of the normal distribution. Generally, a general normal-state variable X is converted into a standard normal-state variable Z (or referred to as a Z statistical quantity) through Z transformation, that is, $Z=[(X-\mu)/\sigma]$, so that original normal distribution of various forms are converted into standard normal distribution with $\mu=0$ and $\sigma=1$. According to the central limit theorem, a sample simulation test shows that when several samples are sampled with fixed n in normal distribution, distribution of a sample mean still complies with normal distribution, that is, $N(\mu, \sigma)$. Therefore, the distribution of the sample mean may also be transformed into standard normal distribution $N(0, 1)$ through Z transformation. In practice, an overall standard deviation of samples is usually unknown. Therefore, when a normal variable X is converted, S (sample variance) is usually used as an estimated value of $\sigma$, that is, $t=[(X-\mu)/S]$. To distinguish from the Z transformation, the foregoing transformation is referred to as t transformation, and distribution of a t statistical quantity is referred to as t distribution.

It may be understood that, it can be learned from properties of the standard normal distribution and the t distribution that a value of z and a value of t include a positive value and a negative value.

(3) A Chi-square test, also referred to as a $X^2$ test, is used to verify whether there is a significant difference between specific proportions of two samples. The Chi-square test is a hypothesis test method based on chi-square distribution. For the Chi-square distribution, if n mutually independent random variables all comply with standard normal distribution, a sum of squares of the n random variables that comply with the standard normal distribution forms a new random variable, and a distribution rule of the new random variable is referred to as the chi-square distribution.

(4) An F test, also referred to as a joint hypothesis test, a variance proportion test, or a variance consistency test, is a significance test used to determine whether variances of two or more samples are different. The F test is a hypothesis test method based on F distribution. For the F distribution, it is assumed that there are two independent random variables x and y, x complies with distribution with a degree of freedom of n, y complies with distribution with a degree of freedom of m, and a distribution rule of proportions of two independent chi-square distribution divided by respective degrees of freedom is referred to as the F distribution.

6. A test statistic is a random variable calculated based on sample data, including a Z statistic, a t statistic, an F statistic, and a chi-square statistic.

7. An original hypothesis is also referred to as a to-be-tested hypothesis, a null hypothesis, and an elimination hypothesis, and is generally denoted as $H_0$. In a hypothesis test, a hypothesis of a proposition about to-be-tested overall distribution is referred to as the original hypothesis.

8. An alternative hypothesis is also referred to as an opposing hypothesis or an alternate hypothesis, and is generally denoted as $H_1$. In a hypothesis test, the alternative hypothesis includes all propositions that are about overall distribution and that make an original hypothesis untenable.

9. A confidence, also referred to as significance level, a meaning stage, and a trust coefficient, refers to a probability that an error may occur when an estimated overall parameter falls within a specific range, and is generally represented by $\alpha$ ($0<\alpha<1$).

10. Rejection field refers to, in a hypothesis test, based on a value range of statistics used to reject an original hypothesis and distribution of test statistics in the hypothesis test, a range for rejecting the original hypothesis $H_0$ that is determined by using a given probability $\alpha$ ($0<\alpha<1$) as a significance level.

In a current technical background, to improve parameter optimization efficiency, a parameter optimization algorithm is generally used to optimize parameters. Common parameter optimization algorithms include a heuristic search algorithm and a reinforcement learning algorithm. The heuristic search algorithm includes a particle swarm optimization algorithm and a simulated annealing algorithm, and the reinforcement learning algorithm includes a proximal policy optimization (proximal policy optimization, PPO) algorithm and a deep deterministic policy gradient (deep deterministic policy gradient, DDPG) algorithm. The heuristic search algorithm aims to find a global optimal solution based on a heuristic principle. The reinforcement learning algorithm focuses on improving a convergence capability in a reinforcement learning process to obtain, through convergence, an optimal solution of a to-be-adjusted parameter. However, in an actual implementation process, parameter adjustment performed in an optimization process may cause a change of an indicator, and jitter also exists in the indicator. In other words, an indicator that does not perform parameter adjustment may also change at any time. However, in the foregoing parameter optimization algorithms, the indicator jitter is not considered. As a result, it cannot be determined whether a difference between indicators before and after parameter adjustment is caused by the parameter adjustment or the indicator jitter. This may lead to a deviation of a parameter optimization direction, or even parameter optimization algorithm convergence failure.

In view of this, embodiments of this application provide a parameter optimization method and apparatus, and an electronic device, to determine whether a difference between indicators before and after parameter adjustment is caused by indicator jitter, and select a parameter value corresponding to an indicator change that is not caused by the indicator jitter as an input of a next iteration of a parameter optimization algorithm. This helps improve convergence of parameter optimization algorithm. During parameter adjustment, a plurality of other parameters are used as performance indicators, so that a plurality of objectives can be optimized simultaneously, and a great deterioration of another performance indicator is avoided when one performance indicator is optimized.

The following describes technical solutions of this application with reference to accompanying drawings.

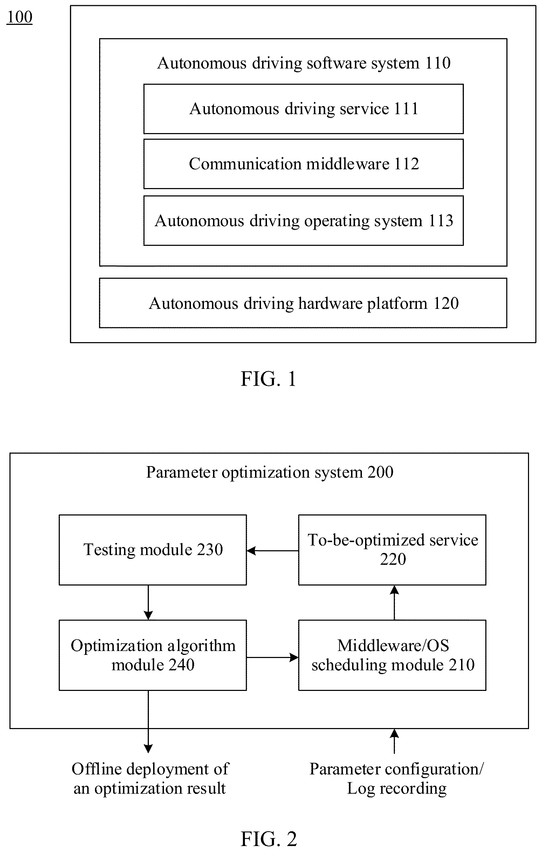

FIG. 1 is a block diagram of an autonomous driving system in an intelligent driving device. The autonomous driving system 100 may include an autonomous driving software system 110 and an autonomous driving hardware platform 120. The autonomous driving software system 110 includes an autonomous driving service 111, a communication middleware 112, and an autonomous driving operating system 113. The autonomous driving service 111 may include one or more services, and each service is used to implement one or more functions. The communication middleware 112 is responsible for interconnecting with the autonomous driving operating system 113, to provide a running and development environment for the autonomous driving service 111, for example, providing services such as communication and resource management for the autonomous driving service 111. The autonomous driving operating system 113 runs on the autonomous driving hardware platform 120, and may perform resource scheduling based on an actual requirement of the autonomous driving service 111 during running. The autonomous driving hardware platform 120 may provide a basic hardware resource for the autonomous driving software system 110. For example, the autonomous driving service 111 obtains, from the autonomous driving hardware platform 120 via the autonomous driving operating system 113, a computing resource, a memory resource, a communication resource, a general-purpose storage resource, a sensing data resource, and the like that are required during running.

An intelligent driving device in embodiments of this application may include a transportation tool on a road, a transportation tool on water, an air transportation tool, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application.

For example, the autonomous driving system 100 shown in FIG. 1 may be disposed on a computing platform of an intelligent driving device. For example, the intelligent driving device is a vehicle. The computing platform may include any one of the following: a vehicle domain controller (vehicle domain controller, VDC), an autonomous driving domain controller (autonomous driving domain controller, ADC), and a cockpit domain controller (cockpit domain controller, CDC). For another example, the computing platform may further include but is not limited to an in-car application-server (in-car application-server, ICAS) controller, a body domain controller (body domain controller, BDC), a special equipment system (special equipment system, SAS), a media graphics unit (media graphics unit, MGU), a body super core (body super core, BSC), and an advanced driver-assistance system super core (advanced driver-assistance system super core, ADAS super core). The ICAS may include at least one of the following: a vehicle control server ICAS 1, an intelligent driving server ICAS 2, an intelligent cockpit server ICAS 3, and an infotainment server ICAS 4.

FIG. 2 is a block diagram of a parameter optimization system according to an embodiment of this application. As shown in FIG. 2, the parameter optimization system 200 includes a middleware/OS scheduling module 210, a to-be-optimized service 220, a testing module 230, and an optimization algorithm module 240. The testing module 230 includes a plurality of hypothesis testing manners, such as a Z test, a T test, an F test, and a chi-square test. Each hypothesis testing manner is related to a to-be-adjusted parameter and an optimization objective. The optimization algorithm module 240 may include a plurality of optimization algorithms, such as a particle swarm optimization algorithm, a simulated annealing algorithm, a PPO algorithm, and a DDPG algorithm. When the parameter optimization system 200 runs, pre-configuration items associated with the to-be-optimized service 220 need to be obtained, including a to-be-optimized indicator and a to-be-adjusted parameter. In addition, during a parameter optimization process, the parameter optimization system 200 needs to record optimization-related log information to monitor the optimization process. When the to-be-optimized service 220 is running, a value of the to-be-adjusted parameter and a value of the to-be-optimized indicator are output to the testing module 230. The testing module 230 performs a hypothesis test based on the value of the to-be-adjusted parameter and the value of the to-be-optimized indicator, and determines whether the hypothesis test on the to-be-optimized indicator succeeds. When the hypothesis test on the to-be-optimized indicator succeeds, it indicates that a value change of the to-be-optimized indicator is not caused by the indicator jitter, and the testing module 230 inputs the value of the to-be-adjusted parameter to the optimization algorithm module 240, so that the optimization algorithm module 240 performs optimization calculation based on the value of the to-be-adjusted parameter. Further, the optimization algorithm module 240 configures a calculated optimized value of the to-be-adjusted parameter for the middleware/OS scheduling module 210. After the configuration succeeds, the optimization algorithm module 240 continues to collect the value of the to-be-optimized indicator of the to-be-optimized service 220, and repeats the foregoing steps until the optimization algorithm module 240 outputs a final optimized value corresponding to the to-be-adjusted parameter when the optimization algorithm converges. When the final optimized value is deployed on a real vehicle (for example, communication middleware of the real vehicle) for running, end-to-end performance of an autonomous driving service of the vehicle can be improved.

For example, the pre-configuration item may include but is not limited to:

1. Scenario configuration item: a to-be-optimized indicator, a deterioration limit indicator, a deterioration limit threshold, single iteration duration, and a statistics time window. The deterioration limit indicator is an indicator that the user expects that the to-be-adjusted parameter does not deteriorate or deteriorates beyond a specific range in a process of optimizing the to-be-adjusted parameter. The deterioration limit threshold indicates a value that deterioration of a performance indicator (for example, the deterioration limit indicator or the to-be-optimized indicator) cannot exceed in the process of optimizing the to-be-adjusted parameter. The single iteration duration is duration of one iteration performed by the parameter optimization algorithm. The statistics time window indicates a time period for obtaining the to-be-optimized indicator.

The deterioration limit threshold may be $\pm 10\%$ or $\pm 5\%$ of a value of the deterioration limit indicator before the to-be-adjusted parameter is adjusted, or may be another value.

In an example, a larger value of a performance indicator indicates poorer performance of a service associated with the performance indicator, and the deterioration limit threshold may be 10% or 5% of a value of the performance indicator before the to-be-adjusted parameter is adjusted. Further, that the value change of the performance indicator does not exceed the deterioration limit threshold may include: A difference between a value of the performance indicator after the to-be-adjusted parameter is adjusted and the value of the performance indicator before the to-be-adjusted parameter is adjusted is less than or equal to the deterioration limit threshold. For example, the performance indicator is CPU usage, and if a value of the performance indicator before the to-be-adjusted parameter is adjusted is 50%, the deterioration limit threshold may be 5%. If an average value of a first group of values of the performance indicator is 55%, the value change of the performance indicator does not exceed the deterioration limit threshold; or if an average value of a first group of values of the performance indicator is 56%, the value change of the performance indicator exceeds the deterioration limit threshold.

In still another example, a smaller value of a performance indicator indicates poorer performance of a service associated with the performance indicator, and the deterioration limit threshold may be -10% or -5% of an average value of a second group of values of the performance indicator. Further, that the value change of the performance indicator does not exceed the deterioration limit threshold may include: A difference between an average value of a first group of values of the performance indicator and the average value of the second group of values of the performance indicator is greater than or equal to the deterioration limit threshold. For example, if the performance indicator is a GPU frame rate, and the average value of the second group of values of the performance indicator is 50 frames per second (frame per second, fps), the deterioration limit threshold may be -5 fps. If the average value of the first group of values of the performance indicator is 46 fps, the value change of the performance indicator does not exceed the deterioration limit threshold; or if the average value of the first group of values of the performance indicator is 44 fps, the value change of the performance indicator does not exceed the deterioration limit threshold.

It should be noted that the value of the deterioration limit indicator may be an average value of a plurality of values of the deterioration limit indicator collected in a period of time.

2. Hypothesis test configuration item: a hypothesis test manner, for example, one or more of the plurality of hypothesis testing manners; and a confidence level, for example, 0.95 or 0.99.

3. Optimization algorithm configuration item: a used parameter optimization algorithm, like a particle swarm optimization algorithm, a simulated annealing algorithm, a PPO algorithm, and a DDPG algorithm; and an algorithm parameter configuration, like a parameter search range and a search step of the optimization algorithm.

4. To-be-adjusted parameter configuration item: a search range, a search step, and a discrete/continuous configuration. It should be noted that some to-be-adjusted parameters are variables that may have any value in a specific range, that is, two adjacent values may be divided infinitely. For example, a to-be-adjusted parameter may have any value in a range from 0 to 5. Some to-be-adjusted parameters are variables whose values may be listed in a specific order. For example, a to-be-adjusted parameter may have any value in 0, 1, 2, 3, 4, and 5. Therefore, the discrete/continuous configuration is used to configure whether to search for a value of a to-be-adjusted parameter in a continuous space or a discrete space.

For example, in a running process of the parameter optimization system 200, optimization-related log information is recorded to monitor an optimization process, to facilitate problem location and feedback of an optimization effect. For example, the optimization-related log information may include at least one of the following:

1. Optimization algorithm search process record, including a value of a selected to-be-adjusted parameter and an optimization effect record, like a value change of a to-be-optimized indicator and a value change of a deterioration limit indicator.

2. Unaccepted solution record: an abnormal solution and a normal but not accepted solution. The abnormal solution may include a value of a to-be-adjusted parameter caused by parameter search exceeding a set range. The normal but not accepted solution may include: a value of a corresponding to-be-adjusted parameter when a value change of the to-be-optimized indicator is caused by indicator jitter; and a value of a corresponding to-be-adjusted parameter when a value change of the to-be-optimized indicator is not caused by indicator jitter, but the value of the to-be-adjusted parameter causes a change of a deterioration limit indicator to exceed a deterioration limit threshold.

3. Abnormal status record: an abnormal parameter search range, and an abnormal to-be-optimized indicator.

4. Hypothesis test value calculation record: A calculation process needs to be recorded to locate an abnormal input and a calculation process errors because different hypothesis tests have different calculation methods.

For example, the middleware/OS scheduling module 210 may be disposed in the communication middleware 112 shown in FIG. 1. The to-be-optimized service 220 may be disposed in the autonomous driving service 111 shown in FIG. 1. The testing module 230 may be disposed in the communication middleware 112, or the testing module 230 may be disposed in the autonomous driving operating system 113, or the testing module 230 may be independently disposed in a module. The optimization algorithm module 240 may be disposed in the communication middleware 112, or the optimization algorithm module 240 may be independently disposed in a module.

In some possible implementations, the testing module 230 and the optimization algorithm module 240 may be disposed in one module.

It should be understood that the architecture shown in FIG. 2 is merely an example for description. In a specific implementation process, the system shown in FIG. 2 may include more or fewer modules.

Based on the parameter optimization system shown in FIG. 2, this application provides a parameter optimization method.

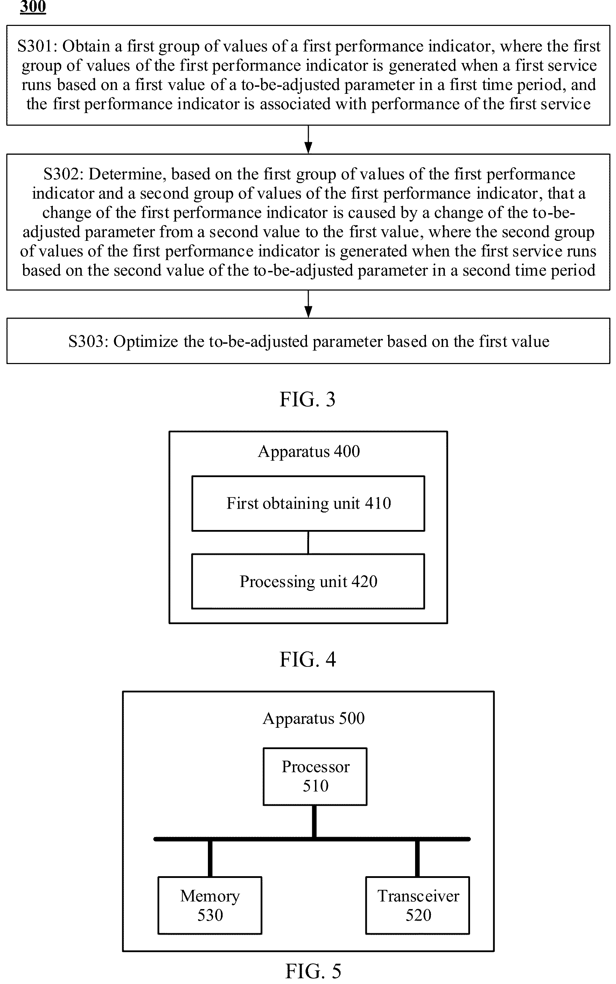

FIG. 3 is a schematic flowchart of a parameter optimization method according to an embodiment of this application. The method 300 may be performed by the parameter optimization system 200 shown in FIG. 2, for example, performed by the testing module 230 shown in FIG. 2. The method 300 includes S301 to S303.

S301: Obtain a first group of values of a first performance indicator, where the first group of values of the first performance indicator is generated when a first service runs based on a first value of a to-be-adjusted parameter in a first time period, the first performance indicator is associated with performance of the first service, and the first service runs on a first device.

For example, the first performance indicator may include the to-be-optimized indicator in the foregoing embodiment, the first service may include the to-be-optimized service in the foregoing embodiment, and the to-be-adjusted parameter may include the to-be-adjusted parameter in the foregoing embodiment. That the first performance indicator is associated with the performance of the first service may be understood as that the first performance indicator affects the performance of the first service.

For example, the first service is related to autonomous driving, for example, may be a regulation and control service or a sensing service in an autonomous driving function.

For example, the first group of values of the first performance indicator includes a plurality of values of the first performance indicator.

For example, to optimize memory bandwidth of a CPU associated with the regulation and control service or the sensing service, memory system resource partitioning and monitoring (memory system resource partitioning and monitoring, MPAM) may be used as a to-be-adjusted parameter. Because an occupation status of the memory bandwidth of the CPU may be directly measured by using CPU usage, the CPU usage may be used as a first performance indicator. The CPU usage is also a constantly changing value. In the autonomous driving system, thousands of threads may run simultaneously, and a running environment is constantly changing. Therefore, the CPU usage also constantly jitters due to an impact of these factors. It needs to be determined whether a value of the CPU usage changes in a hypothesis test manner to determine whether indicator jitter occurs.

S302: Determine, based on the first group of values of the first performance indicator and a second group of values of the first performance indicator, that a value change of the first performance indicator is caused by a change of the to-be-adjusted parameter from a second value to the first value, where the second group of values of the first performance indicator is generated when the first service runs based on the second value of the to-be-adjusted parameter in a second time period.

For example, the second group of values of the first performance indicator includes a plurality of pieces of data of the first performance indicator.

For example, the first time period and the second time period may have same lengths, or the first time period and the second time period may have different lengths.

In some possible implementations, the second value of the to-be-adjusted parameter may be a value obtained when parameter optimization is not performed, and the first value of the to-be-adjusted parameter may be a value obtained after one or more iterations of a first optimization algorithm; or the second value of the to-be-adjusted parameter may be a valid value output in a previous iteration of a first optimization algorithm, and the first value of the to-be-adjusted parameter may be a value output in a current iteration of the first optimization algorithm. The valid value may be understood as a value that is successfully verified by the testing module.

In some possible implementations, it may be determined, through a hypothesis test, whether the value change of the first performance indicator is caused by the change of the to-be-adjusted parameter from the second value to the first value. For example, a hypothesis test is performed on an average value of the first group of values of the first performance indicator and an average value of the second group of values of the first performance indicator according to a first hypothesis; and when the hypothesis test succeeds, it is determined that the value change of the first performance indicator is caused by the change of the to-be-adjusted parameter from the second value to the first value.

For example, the hypothesis test manner may be shown in Table 1. The first hypothesis may be any original hypothesis $H_0$ in Table 1, and that the hypothesis test succeeds means that the original hypothesis $H_0$ is true.

Table 1

| | Test statistics | Original hypothesis $H_0$ | Alternative hypothesis $H_1$ | Rejection field |
|---|---|---|---|---|
| 1 | $Z = \dfrac{\bar{X} - \mu_0}{\sigma/\sqrt{n}}$ | $\mu \le \mu_0$ | $\mu > \mu_0$ | $z \ge z_\alpha$ |
| | | $\mu \ge \mu_0$ | $\mu < \mu_0$ | $z \le z_{(1-\alpha)}$ |
| | | $\mu = \mu_0$ | $\mu \ne \mu_0$ | $|z| \ge z_{\alpha/2}$ |
| 2 | $t = \dfrac{\bar{X} - \mu_0}{S/\sqrt{n}}$ | $\mu \le \mu_0$ | $\mu > \mu_0$ | $t \ge t_\alpha(n-1)$ |
| | | $\mu \ge \mu_0$ | $\mu < \mu_0$ | $t \le t_{(1-\alpha)}(n-1)$ |
| | | $\mu = \mu_0$ | $\mu \ne \mu_0$ | $|t| \ge t_{\alpha/2}(n-1)$ |
| 3 | $Z = \dfrac{\bar{X} - \bar{Y} - \delta}{\sqrt{\dfrac{\sigma_1^2}{n_1} + \dfrac{\sigma_2^2}{n_2}}}$ | $\mu_1 - \mu_2 \le \delta$ | $\mu_1 - \mu_2 > \delta$ | $z \ge z_\alpha$ |
| | | $\mu_1 - \mu_2 \ge \delta$ | $\mu_1 - \mu_2 < \delta$ | $z \le z_{(1-\alpha)}$ |
| | | $\mu_1 - \mu_2 = \delta$ | $\mu_1 - \mu_2 \ne \delta$ | $|z| \ge z_{\alpha/2}$ |
| 4 | $t = \dfrac{\bar{X} - \bar{Y} - \delta}{S_w\sqrt{\dfrac{1}{n_1} + \dfrac{1}{n_2}}}$ $S_w^2 = \dfrac{(n_1 - 1)S_1^2 + (n_2 - 1)S_2^2}{n_1 + n_2 - 2}$ | $\mu_1 - \mu_2 \le \delta$ | $\mu_1 - \mu_2 > \delta$ | $t \ge t_\alpha(n_1 + n_2 - 2)$ |
| | | $\mu_1 - \mu_2 \ge \delta$ | $\mu_1 - \mu_2 < \delta$ | $t \le t_{(1-\alpha)}(n_1 + n_2 - 2)$ |
| | | $\mu_1 - \mu_2 = \delta$ | $\mu_1 - \mu_2 \ne \delta$ | $|t| \ge t_{\frac{\alpha}{2}}(n_1 + n_2 - 2)$ |
| 5 | $t = \dfrac{\bar{D}}{S_D/\sqrt{n}}$ | $\mu_D \le 0$ | $\mu_D > 0$ | $t \ge t_\alpha(n-1)$ |
| | | $\mu_D \ge 0$ | $\mu_D < 0$ | $t \le -t_\alpha(n-1)$ |
| | | $\mu_D = 0$ | $\mu_D \ne 0$ | $|t| \ge t_{\alpha/2}(n-1)$ |

For test statistics $Z = \frac{\bar{X}-\mu_0}{\sigma/\sqrt{n}}$ and $t = \frac{\bar{X}-\mu_0}{S/\sqrt{n}}$, $\bar{X}$ represents a sample average value of the first group of values of the first performance indicator, $n$ represents a sample capacity of the first group of values of the first performance indicator, $\sigma$ represents an overall standard deviation of the first group of values of the first performance indicator, $\mu$ represents an overall average value of the first group of values of the first performance indicator, $\mu_0$ represents an overall average value of the second group of values of the first performance indicator, z represents a value of a statistic $Z$, $\alpha$ represents the confidence level, $z_\alpha$ represents a value of z obtained by searching a z distribution table based on the confidence level $\alpha$, $t$ represents a value of a statistic $t$, and $t_\alpha(n-1)$ indicates a value of t obtained by searching a t distribution table based on a degree of freedom $n-1$ and the confidence level $\alpha$. $\alpha$ may be 0.90, or $\alpha$ may be 0.95, or $\alpha$ may be another value between 0 and 1.

In an example, if the value change of the to-be-adjusted parameter does not cause the increase of the value of the first performance indicator, when the value of the first performance indicator increases, it may be considered that the increase is caused by indicator jitter. In this case, the original hypothesis may be $\mu \le \mu_0$, the alternative hypothesis is $\mu > \mu_0$, and the rejection field is $z \ge z_\alpha$. Further, if $z \ge z_\alpha$ is not met, the original hypothesis $\mu \le \mu_0$ is true. In other words, when the to-be-adjusted parameter changes from the second value to the first value, the value of the first performance indicator decreases or remains unchanged. In other words, the change is not caused by jitter of the first performance indicator. In other words, the hypothesis test succeeds. If $z \ge z_\alpha$ is met, the alternative hypothesis $\mu > \mu_0$ is true. In other words, when the to-be-adjusted parameter changes from the second value to the first value, the value of the first performance indicator becomes larger, and the change is caused by jitter of the first performance indicator.

In another example, if the value change of the to-be-adjusted parameter does not cause the increase of the value of the first performance indicator, when the value of the first performance indicator increases, it may be considered that the increase is caused by indicator jitter. In this case, the original hypothesis may be $\mu \le \mu_0$, the alternative hypothesis is $\mu > \mu_0$, and the rejection field is $t \ge t_\alpha(n-1)$. Further, if $t \ge t_\alpha(n-1)$ is not met, the original hypothesis $\mu \le \mu_0$ is true. In other words, when the to-be-adjusted parameter changes from the second value to the first value, the value of the first performance indicator decreases or remains unchanged. In other words, the change is not caused by jitter of the first performance indicator. In other words, the hypothesis test succeeds. If $t \geq t_\alpha(n-1)$ is met, the alternative hypothesis $\mu > \mu_0$ is true. In other words, when the to-be-adjusted parameter changes from the second value to the first value, the value of the first performance indicator becomes larger, and the change is caused by jitter of the first performance indicator.

By analogy, a relationship between an original hypothesis, an alternative hypothesis, and a rejection field in another row whose test statistic is $t = \frac{\bar{X} - \mu_0}{S/\sqrt{n}}$ and test statistic is $Z = \frac{\bar{X} - \mu_0}{\sigma/\sqrt{n}}$ in Table 1 may be deduced based on the foregoing descriptions, and details are not described herein again. In practice, a specific hypothesis test manner may be selected based on a specific property (for example, a property indicating whether the first performance indicator needs to be increased or decreased after the to-be-adjusted parameter is adjusted) of the first performance indicator.

In addition, the test statistics in Table 1 are hypothesis test manners corresponding to $Z = \frac{\bar{X} - \mu_0}{\sigma/\sqrt{n}}$ and $t = \frac{\bar{X} - \mu_0}{S/\sqrt{n}}$. In addition to determining whether the change of the first performance indicator is caused by the change of the to-be-adjusted parameter from the second value to the first value, it may be further determined whether the first performance indicator is optimized or deteriorated. For example, a larger value of the first performance indicator indicates that the first performance indicator is optimized. If the original hypothesis is $\mu \geq \mu_0$, when the original hypothesis $\mu \geq \mu_0$ is true, it indicates that the first performance indicator is optimized.

As described above, if the first group of values of the first performance indicator includes a plurality of values of the first performance indicator, the first group of values of the first performance indicator may be all of the plurality of values, and samples of the first group of values of the first performance indicator may be a part of values selected from the plurality of values.

For test statistics $Z = \frac{\bar{X} - \bar{Y} - \delta}{\sqrt{\frac{\sigma_1^2}{n_1} + \frac{\sigma_2^2}{n_2}}}$ and $t = \frac{\bar{X} - \bar{Y} - \delta}{S_w\sqrt{\frac{1}{n_1} + \frac{1}{n_2}}}$, $\bar{X}$ represents a sample average value of the first group of values of the first performance indicator, $\bar{Y}$ represents a sample average value of the second group of values of the first performance indicator, $n_1$ represents a sample capacity of the first group of values of the first performance indicator, $n_2$ represents a sample capacity of the second group of values of the first performance indicator, $\sigma_1^2$ represents an overall variance of the first group of values of the first performance indicator, $\sigma_2^2$ represents an overall variance of the second group of values of the first performance indicator, $\mu_1$ represents an overall average value of the first group of values of the first performance indicator, $\mu_2$ represents an overall average value of the second group of values of the first performance indicator, $S_w^2$ represents a combined sample variance, that is, a variance obtained by combining samples of the first group of values of the first performance indicator and samples of the second group of values of the first performance indicator, and $\delta$ represents a difference between the sample average value of the second group of values of the first performance indicator and the sample average value of the first group of values of the first performance indicator. In this embodiment of this application, $\delta$ may be a deterioration limit threshold, for example, $\delta = \pm 0.1 * \mu_2$.

In an example, if the value change of the to-be-adjusted parameter causes a value increase amplitude of the first performance indicator not to exceed $\delta$, and when the value increase amplitude of the first performance indicator exceeds $\delta$, it may be considered that the increase is caused by indicator jitter. In this case, the original hypothesis may be $\mu_1 - \mu_2 \leq \delta$, the alternative hypothesis is $\mu_1 - \mu_2 > \delta$, and the rejection field is $z \geq z_\alpha$. Further, if $z \geq z_\alpha$ is not met, the original hypothesis $\mu_1 - \mu_2 \leq \delta$ is true. In other words, when the to-be-adjusted parameter changes from the second value to the first value, the value increase amplitude of the first performance indicator does not exceed $\delta$. In other words, the hypothesis test succeeds. If $z \geq z_\alpha$ is met, the alternative hypothesis $\mu_1 - \mu_2 > \delta$ is true. In other words, when the to-be-adjusted parameter changes from the second value to the first value, the value increase amplitude of the first performance indicator exceeds $\delta$, and the value increase of the first performance indicator is caused by jitter of the first performance indicator.

In another example, if the value change of the to-be-adjusted parameter causes a value increase amplitude of the first performance indicator not to exceed $\delta$, and when the value increase amplitude of the first performance indicator exceeds $\delta$, it may be considered that the increase is caused by indicator jitter. In this case, the original hypothesis may be $\mu_1 - \mu_2 \leq \delta$, the alternative hypothesis is $\mu_1 - \mu_2 > \delta$, and the rejection field is $t \geq t_\alpha(n_1 + n_2 - 2)$. Further, if $t \geq t_\alpha(n_1 + n_2 - 2)$ is not met, the original hypothesis $\mu_1 - \mu_2 \leq \delta$ is true. In other words, when the to-be-adjusted parameter changes from the second value to the first value, the value increase amplitude of the first performance indicator does not exceed $\delta$. In other words, the hypothesis test succeeds. If $t \geq t_\alpha(n_1 + n_2 - 2)$ is met, the alternative hypothesis $\mu_1 - \mu_2 > \delta$ is true. In other words, when the to-be-adjusted parameter changes from the second value to the first value, the value increase amplitude of the first performance indicator exceeds $\delta$, and the value increase of the first performance indicator is caused by jitter of the first performance indicator.

By analogy, a relationship between an original hypothesis, an alternative hypothesis, and a rejection field in another row whose test statistic is $Z = \dfrac{\bar{X}-\bar{Y}-\delta}{\sqrt{\frac{\sigma_1^2}{n_1}+\frac{\sigma_2^2}{n_2}}}$ and statistic is $t = \dfrac{\bar{X}-\bar{Y}-\delta}{S_W\sqrt{\frac{1}{n_1}+\frac{1}{n_2}}}$ in Table 1 may be deduced based on the foregoing descriptions, and details are not described herein again. In practice, a specific hypothesis test manner may be selected based on a specific property (for example, an expected increase amplitude or an expected decrease amplitude of the first performance indicator after the to-be-adjusted parameter is adjusted) of the first performance indicator.

It may be understood that, for test statistics $Z = \dfrac{\bar{X}-\bar{Y}-\delta}{\sqrt{\frac{\sigma_1^2}{n_1}+\frac{\sigma_2^2}{n_2}}}$ and $t = \dfrac{\bar{X}-\bar{Y}-\delta}{S_W\sqrt{\frac{1}{n_1}+\frac{1}{n_2}}}$, a value of $\delta$ may represent an optimization degree or a deterioration degree of the first performance indicator. In a specific implementation process, by adjusting the value of $\delta$, whether the optimization degree or the deterioration degree of the first performance indicator meets an expectation may be determined based on whether a value relationship between a difference between $\mu_1$ and $\mu_2$ and $\delta$ meets the original hypothesis.

For a test statistic $t = \dfrac{\bar{D}}{S_D/\sqrt{n}}$, $n$ represents a sample capacity of the first group of values of the first performance indicator and a sample capacity of the second group of values of the first performance indicator, that is, the sample capacities of the two groups of values are equal, $\mu_D$ is a difference between an overall average value of the first group of values of the first performance indicator and an overall average value of the second group of values of the first performance indicator, $\bar{D}$ represents a difference between a sample average value of the first group of values of the first performance indicator and a sample average value of the second group of the first performance indicator, and $S_D$ is a standard deviation obtained by combining samples of the first group of values of the first performance indicator and samples of the second group of values of the first performance indicator. When a quantity of the first group of values of the first performance indicator is the same as a quantity of the second group of values of the first performance indicator, a hypothesis test may be performed based on the test statistic $t = \dfrac{\bar{D}}{S_D/\sqrt{n}}$.

S303: Optimize the to-be-adjusted parameter based on the first value.

For example, the first value may be a value determined based on the first optimization algorithm, and the first optimization algorithm may be any optimization algorithm in the foregoing optimization algorithm module 240. Optimizing the to-be-adjusted parameter based on the first value may include: inputting the first value into the first optimization algorithm, so that the first optimization algorithm optimizes the to-be-adjusted parameter based on the first value.

In some possible implementations, the method further includes: obtaining a first group of values of a second performance indicator in the first time period, where the second performance indicator is associated with performance of a second service, and the second service runs on the first device; and determining, based on a second group of values of the second performance indicator and the first group of values of the second performance indicator, a value change of the second performance indicator when the to-be-adjusted parameter changes from the second value to the first value, where the second group of values of the second performance indicator is generated when the second service runs based on the second value of the to-be-adjusted parameter in the second time period; and optimizing the to-be-adjusted parameter based on the first value includes: optimizing the to-be-adjusted parameter based on the first value when the value change of the second performance indicator does not exceed a deterioration limit threshold.

For example, the second performance indicator may include the deterioration limit indicator in the foregoing embodiment, and the deterioration limit threshold may include the deterioration limit threshold in the foregoing embodiment. A hypothesis test may be performed on the average value of the first group of values of the second performance indicator and the average value of the second group of values of the second performance indicator according to a third hypothesis. When the hypothesis test succeeds, it is determined that the value change of the second performance indicator does not exceed the deterioration limit threshold. The third hypothesis may be the original hypothesis $H_0$ described in a third row or a fourth row in Table 1.

When the hypothesis test manner represented in the third row or the fourth row in Table 1 is applied to determining whether the value change of the second performance indicator exceeds the deterioration limit threshold, $\bar{X}$ represents a sample average value of the first group of values of the second performance indicator, $\bar{Y}$ represents a sample average value of the second group of values of the second performance indicator, $n_1$ represents a sample capacity of the first group of values of the second performance indicator, $n_2$ represents a sample capacity of the second group of values of the second performance indicator, $\sigma_1^2$ represents an overall variance of the first group of values of the second performance indicator, $\sigma_2^2$ represents an overall variance of the second group of values of the second performance indicator, $\mu_1$ represents an

overall average value of the first group of values of the second performance indicator, $\mu_2$ represents an overall average value of the second group of values of the second performance indicator, $S_w^2$ represents a combined sample variance, that is, a variance obtained by combining samples of the first group of values of the second performance indicator and samples of the second group of values of the second performance indicator, and $\delta$ represents a difference between the sample average value of the second group of values of the second performance indicator and the sample average value of the first group of values of the second performance indicator.

In an example, if it is expected that the value change of the to-be-adjusted parameter causes the increase of the value of the second performance indicator not to exceed the deterioration limit threshold $\delta$, for example, $\delta = 0.1 * \mu_2$. In this case, the original hypothesis may be $\mu_1 - \mu_2 \leq \delta$, the alternative hypothesis is $\mu_1 - \mu_2 > \delta$, and the rejection field is $\boldsymbol{z} \geq \boldsymbol{z}_\alpha$. Further, if $\boldsymbol{z} \geq \boldsymbol{z}_\alpha$ is not met, the original hypothesis $\mu_1 - \mu_2 \leq \delta$ is true. In other words, when the to-be-adjusted parameter changes from the second value to the first value, the value increase amplitude of the second performance indicator does not exceed the deterioration limit threshold $\delta$. In other words, the hypothesis test succeeds. If $\boldsymbol{z} \geq \boldsymbol{z}_\alpha$ is met, the alternative hypothesis $\mu_1 - \mu_2 > \delta$ is true. In other words, when the to-be-adjusted parameter changes from the second value to the first value, the value increase amplitude of the second performance indicator exceeds deterioration limit threshold $\delta$.

In another example, if it is expected that the value change of the to-be-adjusted parameter causes the increase of the value of the second performance indicator not to exceed the deterioration limit threshold $\delta$, for example, $\delta = 0.1 * \mu_2$. In this case, the original hypothesis may be $\mu_1 - \mu_2 \leq \delta$, the alternative hypothesis is $\mu_1 - \mu_2 > \delta$, and the rejection field is $t \geq t_\alpha(n_1 + n_2 - 2)$. Further, if $t \geq t_\alpha(n_1 + n_2 - 2)$ is not met, the original hypothesis $\mu_1 - \mu_2 \leq \delta$ is true. In other words, when the to-be-adjusted parameter changes from the second value to the first value, the value increase amplitude of the second performance indicator does not exceed the deterioration limit threshold $\delta$. In other words, the hypothesis test succeeds. If $t \geq t_\alpha(n_1 + n_2 - 2)$ is met, the alternative hypothesis $\mu_1 - \mu_2 > \delta$ is true. In other words, when the to-be-adjusted parameter changes from the second value to the first value, the value increase amplitude of the first performance indicator exceeds the deterioration limit threshold $\delta$.

As described above, if the first group of values of the second performance indicator includes a plurality of values of the first performance indicator, the first group of values of the second performance indicator may be all of the plurality of values, and samples of the first group of values of the second performance indicator may be a part of values selected from the plurality of values. Concepts of samples and a whole of the second group of values of the second performance indicator are similar to concepts of samples and a whole of the first group of values of the second performance indicator.

For example, the second service and the first service may be a same service, or may be different services. The second service and the first service share resources of the first device, for example, CPU memory bandwidth and an OS scheduling capability.

For example, in the autonomous driving software system, the CPU may share memory bandwidth with an artificial intelligence core (artificial intelligence core, AICore), a GPU, an image signal processor (image signal processor, ISP), and the like. When the CPU memory bandwidth is optimized, another memory bandwidth may be deteriorated. For example, when the CPU accesses a memory, the memory is occupied by the AICore. In this case, CPU usage may increase. To optimize the CPU memory bandwidth, a parameter (like an MPAM parameter) may be adjusted to increase a priority of the CPU when accessing a specific memory. In this way, the CPU usage is reduced, and the CPU usage (or the CPU memory bandwidth) is optimized. However, increasing a priority of accessing the memory by the CPU inevitably affects a priority of accessing the memory by the AICore. For example, when the AICore accesses a memory and the memory is occupied by the CPU, and consequently a frame rate of the AICore decreases, that is, an AICore frame rate (or AICore memory bandwidth) is deteriorated. Similarly, when the CPU usage is optimized, a GPU frame rate and an ISP frame rate may be deteriorated. Therefore, when the CPU usage is used as the first performance indicator, any one of the AICore frame rate, the GPU frame rate, and the ISP frame rate may be used as the second performance indicator.

In some possible implementations, the method further includes: determining, based on the first group of values of the first performance indicator and the second group of values of the first performance indicator, whether a variance change of the first performance indicator is within a preset range; and optimizing the to-be-adjusted parameter based on the first value includes: when the variance change of the first performance indicator is within the preset range, optimizing the to-be-adjusted parameter based on the first value. For example, the preset range may be a range less than a variance of the second group of values of the first performance indicator, or may be a range greater than a variance of the second group of values of the first performance indicator, or may be another range.

For example, that the variance change of the first performance indicator is within the preset range may indicate that the indicator jitter of the first performance indicator is less than or equal to a preset threshold. Specifically, determining whether the variance change of the first performance indicator is within the preset range may include: performing a hypothesis test on a variance of the first group of values of the first performance indicator and the variance of the second group of values of the first performance indicator according to a second hypothesis; and when the hypothesis test succeeds, determining that the variance change of the first performance indicator is within the preset range.

For example, the second hypothesis may be any original hypothesis $H_0$ in Table 2, and that the hypothesis test succeeds means that the original hypothesis $H_0$ is true.

Table 2

| | Test statistics | Original hypothesis $H_0$ | Alternative hypothesis $H_1$ | Rejection field |
|---|---|---|---|---|
| 1 | $\mathcal{X}^2 = \dfrac{(n-1)S^2}{\sigma_0^2}$ | $\sigma^2 \leq \sigma_0^2$ | $\sigma^2 > \sigma_0^2$ | $\mathcal{X}^2 \geq \mathcal{X}_a^2(n-1)$ |
| | | $\sigma^2 \geq \sigma_0^2$ | $\sigma^2 < \sigma_0^2$ | $\mathcal{X}^2 \leq \mathcal{X}_{1-a}^2(n-1)$ |
| | | $\sigma^2 = \sigma_0^2$ | $\sigma^2 \neq \sigma_0^2$ | $\mathcal{X}^2 \geq \mathcal{X}_{a/2}^2(n-1)$ |
| 2 | $F = \dfrac{S_1^2}{S_2^2}$ | $\sigma_1^2 \leq \sigma_2^2$ | $\sigma_1^2 > \sigma_2^2$ | $F \geq F_a(n_1 - 1, n_2 - 1)$ |
| | | $\sigma_1^2 \geq \sigma_2^2$ | $\sigma_1^2 < \sigma_2^2$ | $F \leq F_{1-a}(n_1 - 1, n_2 - 1)$ |
| | | $\sigma_1^2 = \sigma_2^2$ | $\sigma_1^2 \neq \sigma_2^2$ | $F \geq F_{a/2}(n_1 - 1, n_2 - 1)$ |

For a test statistic $\mathcal{X}^2 = \frac{(n-1)S^2}{\sigma_0^2}$, n represents a sample capacity of the first group of values of the first performance indicator, $S^2$ represents a sample variance of the first group of values of the first performance indicator, $\sigma^2$ represents an overall variance of the first group of values of the first performance indicator, $\sigma_0^2$ represents an overall variance of the second group of values of the first performance indicator, $X^2$ represents a value of a statistic $X^2$, $a$ represents a confidence level, and $\mathcal{X}_a^2(n-1)$ represents a value of $X^2$ obtained by searching a chi-square distribution table based on a degree of freedom $n$ - 1 and the confidence level $a$. $a$ may be 0.90, or $a$ may be 0.95, or $a$ may be another value between 0 and 1. For example, if it is expected that the value change of the to-be-adjusted parameter does not cause an increase in the indicator jitter of the first performance indicator, the original hypothesis may be $\sigma^2 \leq \sigma_0^2$, the alternative hypothesis is $\sigma^2 > \sigma_0^2$, and the rejection field is $\mathcal{X}^2 \geq \mathcal{X}_a^2(n-1)$. Further, if $\mathcal{X}^2 \geq \mathcal{X}_a^2(n-1)$ is not met, the original hypothesis $\sigma^2 \leq \sigma_0^2$ is true. In other words, when the to-be-adjusted parameter changes from the second value to the first value, the indicator jitter of the first performance indicator does not increase. In other words, the hypothesis test succeeds, and the to-be-adjusted parameter may continue to be optimized based on the first value of the to-be-adjusted parameter. If $\mathcal{X}^2 \geq \mathcal{X}_a^2(n-1)$ is met, the alternative hypothesis $\sigma^2 > \sigma_0^2$ is true. In other words, when the to-be-adjusted parameter changes from the second value to the first value, the jitter of the first performance indicator increases.

For a test statistic $F = \frac{S_1^2}{S_2^2}$, $n_1$ represents a sample capacity of the second group of values of the first performance indicator, $n_2$ represents a sample capacity of the first group of values of the first performance indicator, $\sigma_1^2$ represents an overall variance of the second group of values of the first performance indicator, $\sigma_2^2$ represents an overall variance of the first group of values of the first performance indicator, F represents a value of a statistic F, $a$ represents a confidence level, and $F_a(n_1 - 1, n_2 - 1)$ represents a value of F obtained by searching a F distribution table based on a degree of freedom $n_1$ - 1, a degree of freedom $n_2$ - 1, and the confidence level $a$. $a$ may be 0.90, or $a$ may be 0.95, or $a$ may be another value between 0 and 1. For example, if it is expected that the value change of the to-be-adjusted parameter does not cause an increase in the indicator jitter of the first performance indicator, the original hypothesis may be $\sigma_1^2 \leq \sigma_2^2$, the alternative hypothesis is $\sigma_1^2 > \sigma_2^2$, and the rejection field is $F \geq F_a(n_1 - 1, n_2 - 1)$. Further, if $F \geq F_a(n_1 - 1, n_2 - 1)$ is not met, the original hypothesis $\sigma_1^2 \leq \sigma_2^2$ is true. In other words, when the to-be-adjusted parameter changes from the second value to the first value, the indicator jitter of the first performance indicator does not increase. In other words, the hypothesis test succeeds, and the to-be-adjusted parameter may continue to be optimized based on the first value of the to-be-adjusted parameter. If $F \geq F_a(n_1 - 1, n_2 - 1)$ is met, the alternative hypothesis $\sigma_1^2 > \sigma_2^2$ is true. In other words, when the to-be-adjusted parameter changes from the second value to the first value, the jitter of the first performance indicator increases.

In some possible implementations, when at least two of the following a to c are met, the to-be-adjusted parameter is optimized based on the first value: a. When the to-be-adjusted parameter changes from the second value to the first value, the value change of the first performance indicator is not caused by the jitter of the first performance indicator; b. The value change of the second performance indicator does not exceed the deterioration limit threshold (as shown in $\delta$ in Table 1); and c. The value change of the first performance indicator does not exceed the deterioration limit threshold (as shown in $\delta$ in Table 1).

For example, if it is set that the to-be-adjusted parameter is optimized based on the first value when two of the foregoing a to c are met, the value of the to-be-adjusted parameter is re-obtained when either of the foregoing two is not met. For example, when a and b are met, the to-be-adjusted parameter is optimized based on the first value. When either of a and b is not met, the value of the to-be-adjusted parameter is re-obtained. The method can be deduced by analogy.

For example, if it is set that the to-be-adjusted parameter is optimized based on the first value when three of the foregoing a to c are met, the value of the to-be-adjusted parameter is re-obtained when any one of the foregoing a to c is not met.

In some possible implementations, optimizing the to-be-adjusted parameter based on the first value includes: adjusting the first value to a third value of the to-be-adjusted parameter, to enable a running result of the first device to meet a specified condition. For example, if the to-be-adjusted parameter is an MPAM parameter, that the running result of the first device meets the specified condition may include: The CPU usage of the first service meets the specified condition, for example, reaches a specified CPU usage range.

In some possible implementations, an optimization log is recorded when the first optimization algorithm is controlled to optimize the to-be-adjusted parameter based on the first value, where the optimization log includes at least one of the following: a reason why the first value of the to-be-adjusted parameter is modified, a value that is determined for the to-be-adjusted parameter and that exceeds a set range, a value of the to-be-adjusted parameter when the hypothesis test on the first performance indicator fails, and a value of the to-be-adjusted parameter when the hypothesis test on the first performance indicator succeeds but the hypothesis test on the second performance indicator fails.

For example, that the hypothesis test on the first performance indicator fails may include at least one of the following: The change of the first performance indicator is caused by the indicator jitter; or when the first performance indicator needs to be optimized, the deterioration degree of the first performance indicator is high; or the jitter of the first performance indicator exceeds the set range. That the hypothesis test on the second performance fails may include: A deterioration degree of the second performance indicator exceeds the deterioration limit threshold.

For example, the optimization log may further include another entry in the optimization-related log information in the foregoing embodiment.

According to the parameter optimization method provided in embodiments of this application, it can be determined whether the value change of the performance indicator in the parameter optimization process is caused by the indicator jitter, and whether the value of the to-be-adjusted parameter can be used for the next algorithm iteration is tested in the hypothesis test manner. This helps reduce interference of jitter noise to the algorithm optimization process, and improve the convergence capability of the algorithm. In addition, optimization with an objective of reducing the indicator jitter can be completed in the hypothesis test manner. In a multi-objective optimization manner, when the first performance indicator is optimized, it is ensured that deterioration of the second performance indicator is limited within a specific range. This helps an optimization process meet an optimization requirement of a plurality of performance indicators. In addition, in the parameter optimization process, a value of an abnormal to-be-adjusted parameter and/or a cause of an exception are recorded. This helps improve a problem locating capability in the parameter optimization process.

The foregoing describes in detail the parameter optimization method provided in embodiments of this application with reference to FIG. 1 to FIG. 3. The following describes in detail a parameter optimization apparatus provided in an embodiment of this application with reference to FIG. 4 and FIG. 5. It should be understood that descriptions of parameter optimization apparatus embodiments correspond to the descriptions of the method embodiments. Therefore, for content that is not described in detail, refer to the foregoing method embodiments. For brevity, details are not described herein again.

FIG. 4 is a block diagram of a parameter optimization apparatus 400 according to an embodiment of this application. The apparatus 400 may include units configured to perform the method in FIG. 3. In addition, the units in the apparatus 400 are separately used to implement corresponding procedures of the method embodiment in FIG. 3.

Specifically, the apparatus 400 includes a first obtaining unit 410 and a processing unit 420. The first obtaining unit 410 is configured to obtain a first group of values of a first performance indicator, where the first group of values of the first performance indicator is generated when a first service runs based on a first value of a to-be-adjusted parameter in a first time period, the first performance indicator is associated with performance of the first service, and the first service runs on a first device. The processing unit 420 is configured to: determine, based on the first group of values of the first performance indicator and a second group of values of the first performance indicator, that a value change of the first performance indicator is caused by a change of the to-be-adjusted parameter from a second value to the first value, where the second group of values of the first performance indicator is generated when the first service runs based on the second value of the to-be-adjusted parameter in a second time period; and optimize the to-be-adjusted parameter based on the first value.

Optionally, the first obtaining unit 410 is further configured to obtain a first group of values of a second performance indicator in the first time period, where the second performance indicator is associated with performance of a second service, the second service runs on the first device. The processing unit 420 is further configured to: determine, based on a second group of values of the second performance indicator and the first group of values of the second performance indicator, a value change of the second performance indicator when the to-be-adjusted parameter changes from the second value to the first value, where the second group of values of the second performance indicator is generated when the second service runs based on the second value of the to-be-adjusted parameter in the second time period; and optimize the to-be-adjusted parameter based on the first value when the value change of the second performance indicator does not exceed a deterioration limit threshold.

Optionally, the processing unit 420 is configured to: perform a hypothesis test on an average value of the first group of values of the first performance indicator and an average value of the second group of values of the first performance indicator according to a first hypothesis; and when the hypothesis test succeeds, determine that the value change of the first performance indicator is caused by the change of the to-be-adjusted parameter from the second value to the first value.

Optionally, the processing unit 420 is further configured to: determine, based on the first group of values of the first performance indicator and the second group of values of the first performance indicator, whether a variance change of the first performance indicator is within a preset range; and when the variance change of the first performance indicator is within the preset range, optimize the to-be-adjusted parameter based on the first value.

Optionally, the processing unit 420 is further configured to: perform a hypothesis test on a variance of the first group of values of the first performance indicator and a variance of the second group of values of the first performance indicator according to a second hypothesis; and when the hypothesis test succeeds, determine that the variance change of the first performance indicator is within the preset range.

Optionally, the apparatus 400 further includes a second obtaining unit, configured to: when the value change of the first performance indicator is not caused by the change of the to-be-adjusted parameter from the second value to the first value, re-obtain a value of the to-be-adjusted parameter.

Optionally, the processing unit 420 is configured to adjust the first value to a third value of the to-be-adjusted parameter, to enable a running result of the first device to meet a specified condition.

Optionally, the apparatus 400 further includes a recording unit, configured to record an optimization log when the to-be-adjusted parameter is optimized based on the first value, where the optimization log includes at least one of the following: a reason why the first value of the to-be-adjusted parameter is modified, a value that is determined for the to-be-adjusted parameter and that exceeds a set range, a value of the to-be-adjusted parameter when the hypothesis test on the first performance indicator fails, and a value of the to-be-adjusted parameter when the hypothesis test on the first performance indicator succeeds but the hypothesis test on the second performance indicator fails.

For example, the apparatus 400 may be disposed in the autonomous driving system 100 shown in FIG. 1, or may be disposed in the parameter optimization system 200 shown in FIG. 2. For example, the first obtaining unit 410 and the processing unit 420 may be disposed in the testing module 230 shown in FIG. 2, the second obtaining unit may be disposed in the optimization algorithm module 240 shown in FIG. 2, and the recording unit may be disposed in one module connected to the testing module 230 and the optimization algorithm 240. Operations performed by the first obtaining unit 410 and the processing unit 420 may be performed by one processor, or may be performed by different processors. In a specific implementation process, the one or more processors may be processors disposed in an electronic device; or the apparatus 400 may be a chip disposed in an electronic device. The electronic device may be a computing platform of an intelligent driving device (for example, a vehicle), or the electronic device may be a computer, and the computer includes a virtual autonomous driving system or an autonomous driving system simulator.

In embodiments of this application, the processor is a circuit that has a signal processing capability. In an implementation, the processor may be a circuit that has an instruction reading and running capability, for example, a CPU, a microprocessor, a GPU (which may be understood as a microprocessor), a digital signal processor (digital signal processor, DSP), or the like. In another implementation, the processor may implement a specific function based on a logical relationship of a hardware circuit. The logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), such as a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

In a specific implementation process, all or some of the units in the foregoing apparatus may be integrated together, or may be implemented independently. In an implementation, the units are integrated and implemented in a form of a system-on-a-chip (system-on-a-chip, SOC).

FIG. 5 is a block diagram of a parameter optimization apparatus according to an embodiment of this application. The parameter optimization apparatus 500 shown in FIG. 5 may include a processor 510, a transceiver 520, and a memory 530. The processor 510, the transceiver 520, and the memory 530 are connected through an internal connection path. The memory 530 is configured to store instructions. The processor 510 is configured to execute the instructions stored in the memory 530, to implement the method in the foregoing embodiments. Optionally, the memory 530 may be coupled to the processor 510 through an interface, or may be integrated with the processor 510.

It should be noted that the transceiver 520 may include but is not limited to a transceiver apparatus like an input/output interface (input/output interface), to implement communication between the apparatus 500 and another device or a communication network.

The memory 530 may be a read-only memory (read-only memory, ROM), a static storage device, a dynamic storage device, or a random access memory (random access memory, RAM).

The transceiver 520 uses a transceiver apparatus, for example, but not limited to, a transceiver, to implement communication between the apparatus 500 and another device or a communication network, to receive/send data/information used to implement the methods in the foregoing embodiments.

An embodiment of this application further provides an electronic device. The electronic device includes the parameter optimization apparatus 400 or the parameter optimization apparatus 500.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the descriptions of embodiments of this application, unless otherwise specified, "/" means "or", for example, A/B may mean "A or B"; "and/or" used herein is used to describe an association relationship between associated objects, and indicates that three relationships may exist. For example, "A and/or B" may indicate the following: Only A exists, both A and B exist, and only B exists. In this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one item (pieces) of a, b, or c may indicate: a, b, c, a and b, a and c, b and c, or a, b, and c, where a, b, and c may be singular or plural.

The prefix words "first", "second", and the like in embodiments of this application are merely intended to distinguish between different objects, and impose no limitation on locations, sequences, priorities, quantities, content, or the like of the described objects. In embodiments of this application, use of a prefix word, for example, an ordinal number, for distinguishing between the described objects does not constitute a limitation on the described objects. For descriptions of the described objects, refer to the descriptions in the context in the claims or embodiments. Use of such a prefix word should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

In various embodiments of this application, unless otherwise stated or there is a logic conflict, terms and/or descriptions in each embodiment are consistent and may be mutually referenced, and technical features in different embodiments may be combined based on an internal logical relationship thereof, to form a new embodiment.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A parameter optimization method, comprising:

   obtaining a first group of values of a first performance indicator, wherein the first group of values of the first performance indicator is generated when a first service runs based on a first value of a to-be-adjusted parameter in a first time period, the first performance indicator is associated with performance of the first service, and the first service runs on a first device;
   determining, based on the first group of values of the first performance indicator and a second group of values of the first performance indicator, that a value change of the first performance indicator is caused by a change of the to-be-adjusted parameter from a second value to the first value, wherein the second group of values of the first performance indicator is generated when the first service runs based on the second value of the to-be-adjusted parameter in a second time period; and
   optimizing the to-be-adjusted parameter based on the first value.

2. The method according to claim 1, wherein the method further comprises:

   obtaining a first group of values of a second performance indicator in the first time period, wherein the second performance indicator is associated with performance of a second service, and the second service runs on the first device; and
   determining, based on a second group of values of the second performance indicator and the first group of values of the second performance indicator, a value change of the second performance indicator when the to-be-adjusted parameter changes from the second value to the first value, wherein the second group of values of the second performance indicator is generated when the second service runs based on the second value of the to-be-adjusted parameter in the second time period; and
   optimizing the to-be-adjusted parameter based on the first value comprises:
   when the value change of the second performance indicator does not exceed a deterioration limit threshold, optimizing the to-be-adjusted parameter based on the first value.

3. The method according to claim 1 or 2, wherein determining that the value change of the first performance indicator is caused by the change of the to-be-adjusted parameter from the second value to the first value comprises:

   performing a hypothesis test on an average value of the first group of values of the first performance indicator and an average value of the second group of values of the first performance indicator according to a first hypothesis; and
   when the hypothesis test succeeds, determining that the value change of the first performance indicator is caused by the change of the to-be-adjusted parameter from the second value to the first value.

4. The method according to any one of claims 1 to 3, wherein the method further comprises:

   determining, based on the first group of values of the first performance indicator and the second group of values of the first performance indicator, whether a variance change of the first performance indicator is within a preset range; and
   optimizing the to-be-adjusted parameter based on the first value comprises:
   when the variance change of the first performance indicator is within the preset range, optimizing the to-be-adjusted parameter based on the first value.

**5.** The method according to claim 4, wherein the method further comprises:

performing a hypothesis test on a variance of the first group of values of the first performance indicator and a variance of the second group of values of the first performance indicator according to a second hypothesis; and when the hypothesis test succeeds, determining that the variance change of the first performance indicator is within the preset range.

**6.** The method according to any one of claims 1 to 5, wherein the method further comprises:
when the value change of the first performance indicator is not caused by the change of the to-be-adjusted parameter from the second value to the first value, re-obtaining a value of the to-be-adjusted parameter.

**7.** The method according to any one of claims 1 to 6, wherein optimizing the to-be-adjusted parameter based on the first value comprises:
adjusting the first value to a third value of the to-be-adjusted parameter, to enable a running result of the first device to meet a specified condition.

**8.** The method according to any one of claims 1 to 7, wherein the method further comprises:

recording an optimization log when the to-be-adjusted parameter is optimized based on the first value, wherein the optimization log comprises at least one of the following: a reason why the first value of the to-be-adjusted parameter is modified, a value that is determined for the to-be-adjusted parameter and that exceeds a set range, a value of the to-be-adjusted parameter when the hypothesis test on the first performance indicator fails, and a value of the to-be-adjusted parameter when the hypothesis test on the first performance indicator succeeds but the hypothesis test on the second performance indicator fails, wherein
the first service is related to autonomous driving.

**9.** A parameter optimization apparatus, comprising a first obtaining unit and a processing unit, wherein

the first obtaining unit is configured to obtain a first group of values of a first performance indicator, wherein the first group of values of the first performance indicator is generated when a first service runs based on a first value of a to-be-adjusted parameter in a first time period, the first performance indicator is associated with performance of the first service, and the first service runs on a first device; and
the processing unit is configured to: determine, based on the first group of values of the first performance indicator and a second group of values of the first performance indicator, that a value change of the first performance indicator is caused by a change of the to-be-adjusted parameter from a second value to the first value, wherein the second group of values of the first performance indicator is generated when the first service runs based on the second value of the to-be-adjusted parameter in a second time period; and optimize the to-be-adjusted parameter based on the first value.

**10.** The apparatus according to claim 9, wherein the first obtaining unit is further configured to:

obtain a first group of values of a second performance indicator in the first time period, wherein the second performance indicator is associated with performance of a second service, the second service runs on the first device, and the first service and/or the second service is related to autonomous driving; and
the processing unit is further configured to:

determine, based on a second group of values of the second performance indicator and the first group of values of the second performance indicator, a value change of the second performance indicator when the to-be-adjusted parameter changes from the second value to the first value, wherein the second group of values of the second performance indicator is generated when the second service runs based on the second value of the to-be-adjusted parameter in the second time period; and
when the value change of the second performance indicator does not exceed a deterioration limit threshold, optimize the to-be-adjusted parameter based on the first value.

**11.** The apparatus according to claim 9 or 10, wherein the processing unit is configured to:

perform a hypothesis test on an average value of the first group of values of the first performance indicator and an average value of the second group of values of the first performance indicator according to a first hypothesis; and

when the hypothesis test succeeds, determine that the value change of the first performance indicator is caused by the change of the to-be-adjusted parameter from the second value to the first value.

12. The apparatus according to any one of claims 9 to 11, wherein the processing unit is further configured to:

determine, based on the first group of values of the first performance indicator and the second group of values of the first performance indicator, whether a variance change of the first performance indicator is within a preset range; and
when the variance change of the first performance indicator is within the preset range, optimize the to-be-adjusted parameter based on the first value.

13. The apparatus according to claim 12, wherein the processing unit is further configured to:

perform a hypothesis test on a variance of the first group of values of the first performance indicator and a variance of the second group of values of the first performance indicator according to a second hypothesis; and
when the hypothesis test succeeds, determine that the variance change of the first performance indicator is within the preset range.

14. The apparatus according to any one of claims 9 to 13, wherein the apparatus further comprises a second obtaining unit, configured to:
when the value change of the first performance indicator is not caused by the change of the to-be-adjusted parameter from the second value to the first value, re-obtain a value of the to-be-adjusted parameter.

15. The apparatus according to any one of claims 9 to 14, wherein the processing unit is configured to:
adjust the first value to a third value of the to-be-adjusted parameter, to enable a running result of the first device to meet a specified condition.

16. The apparatus according to any one of claims 9 to 15, wherein the apparatus further comprises a recording unit, configured to:

record an optimization log when the to-be-adjusted parameter is optimized based on the first value, wherein the optimization log comprises at least one of the following: a reason why the first value of the to-be-adjusted parameter is modified, a value that is determined for the to-be-adjusted parameter and that exceeds a set range, a value of the to-be-adjusted parameter when the hypothesis test on the first performance indicator fails, and a value of the to-be-adjusted parameter when the hypothesis test on the first performance indicator succeeds but the hypothesis test on the second performance indicator fails, wherein
the first service is related to autonomous driving.

17. A parameter optimization apparatus, comprising:

a memory, configured to store a computer program; and
a processor, configured to execute the computer program stored in the memory, to enable the control apparatus to perform the method according to any one of claims 1 to 8.

18. An electronic device, wherein the electronic device comprises the apparatus according to any one of claims 9 to 17.

19. A computer-readable storage medium, wherein the computer-readable storage medium stores instructions, and when the instructions are executed by a processor, the processor is enabled to perform the method according to any one of claims 1 to 8.

20. A chip, wherein the chip comprises a circuit, and the circuit is configured to perform the method according to any one of claims 1 to 8.

100

Autonomous driving software system 110

Autonomous driving service 111

Communication middleware 112

Autonomous driving operating system 113

Autonomous driving hardware platform 120

FIG. 1

Parameter optimization system 200

Testing module 230

To-be-optimized service 220

Optimization algorithm module 240

Middleware/OS scheduling module 210

Offline deployment of an optimization result

Parameter configuration/ Log recording

FIG. 2

300

S301: Obtain a first group of values of a first performance indicator, where the first group of values of the first performance indicator is generated when a first service runs based on a first value of a to-be-adjusted parameter in a first time period, and the first performance indicator is associated with performance of the first service

S302: Determine, based on the first group of values of the first performance indicator and a second group of values of the first performance indicator, that a change of the first performance indicator is caused by a change of the to-be-adjusted parameter from a second value to the first value, where the second group of values of the first performance indicator is generated when the first service runs based on the second value of the to-be-adjusted parameter in a second time period

S303: Optimize the to-be-adjusted parameter based on the first value

FIG. 3

Apparatus 400

First obtaining unit 410

Processing unit 420

FIG. 4

Apparatus 500

Processor 510

Memory 530

Transceiver 520

FIG. 5

## INTERNATIONAL SEARCH REPORT

| International application No. |
| --- |
| **PCT/CN2024/075459** |

| A. | CLASSIFICATION OF SUBJECT MATTER |
| --- | --- |

G06F 30/20(2020.01)i

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 自动驾驶, 参数, 优化, 性能, 指标, 值, 变化, 调节, 调整, 更新, 抖动, automatic driving, automobile, parameter, optimize, performance, indicator, value, alter, adjust, modulate, regulate, update, dither

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 117227747 A (BEIJING SANKUAI ONLINE TECHNOLOGY CO., LTD.) 15 December 2023 (2023-12-15) <br> description, paragraphs [0074]-[0213] | 1-20 |
| A | CN 113492863 A (BEIJING CHJ INFORMATION TECHNOLOGY CO., LTD.) 12 October 2021 (2021-10-12) <br> entire document | 1-20 |
| A | CN 115135463 A (SIEMENS AG) 30 September 2022 (2022-09-30) <br> entire document | 1-20 |
| A | CN 115828437 A (CATARC AUTOMOTIVE TEST CENTER (TIANJIN) CO., LTD.) 21 March 2023 (2023-03-21) <br> entire document | 1-20 |
| A | WO 2022246860 A1 (SZ DJI TECHNOLOGY CO., LTD. et al.) 01 December 2022 (2022-12-01) <br> entire document | 1-20 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 April 2024** | **10 May 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075459**

| Patent document cited in search report | | | Publication date (day/month/year) | Patent family member(s) | | | Publication date (day/month/year) |
|---|---|---|---|---|---|---|---|
| CN | 117227747 | A | 15 December 2023 | None | | | |
| CN | 113492863 | A | 12 October 2021 | None | | | |
| CN | 115135463 | A | 30 September 2022 | WO | 2021195970 | A1 | 07 October 2021 |
| | | | | EP | 4122654 | A1 | 25 January 2023 |
| | | | | US | 2023153640 | A1 | 18 May 2023 |
| CN | 115828437 | A | 21 March 2023 | None | | | |
| WO | 2022246860 | A1 | 01 December 2022 | CN | 116783462 | A | 19 September 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310932061